# EUROPÄISCHE PATENTSCHRIFT

(11) **EP 1 238 204 B1**
(45) Veröffentlichungstag und Bekanntmachung des Hinweises auf die Patenterteilung: **06.10.2004**
(21) Anmeldenummer: 01971813.9
(22) Anmeldetag: 30.07.2001
(51) Int. Cl.: F16D 65/12

(54) **BREMSSCHEIBEN-/NABENVERBINDUNG FÜR FAHRZEUGSCHEIBENBREMSEN**
BRAKE DISK/HUB ASSEMBLY FOR VEHICLE DISK BRAKES
ENSEMBLE DISQUE DE FREIN/MOYEU POUR FREINS A DISQUE DE VEHICULE

(30) Priorität: 21.09.2000 DE 10046705
(43) Veröffentlichungstag der Anmeldung: 11.09.2002
(73) Patentinhaber: KNORR-BREMSE SYSTEME FÜR NUTZFAHRZEUGE GMBH, 80809 München (DE)
(72) Erfinder: BAUMGARTNER, Johann, 85368 Moosburg (DE); PAHLE, Wolfgang, 74080 Heilbronn (DE)
(86) Internationale Anmeldenummer: PCT/EP2001/008793
(87) Internationale Veröffentlichungsnummer: WO 2002/025135

(56) Entgegenhaltungen:
- EP-A- 0 610 797
- EP-A- 0 860 626
- EP-A- 0 959 261
- DE-A- 19 839 763
- GB-A- 2 093 949
- US-A- 4 456 099
- US-A- 5 507 367
- US-A- 5 988 613

## Beschreibung

Die Erfindung betrifft eine Bremsscheiben-/Nabenverbindung für Fahrzeugscheibenbremsen insbesondere für Nutzfahrzeuge gemäß dem Oberbegriff des Anspruches 1.

Derartige Fahrzeugscheibenbremsen kommen insbesondere dann zum Einsatz, wenn eine gleichmäßige Bremswirkung bei guter Dosierbarkeit realisiert werden soll. Hierzu wird die Bremsscheibe üblicherweise axial auf die Bremsscheibennabe, die häufig auch eine Radnabe des Fahrzeugs ist, aufgeschoben und gesichert. Die Nabe ist hierzu an ihrer äußeren Umfangsfläche in einer Querschnittsgestalt ausgebildet, die nicht kreisrund ist, sondern vorzugsweise eine zahnförmige Kontur aufweist. Die Bremsscheibe ist im Bereich ihrer Durchgangsöffnung komplementär ausgebildet, so daß sich ein Formschluß ergibt, der eine wechselseitige Verdrehung dieser Komponenten nicht zuläßt und mittels dem somit das Bremsmoment von der Bremsscheibe auf die Nabe übertragen wird.

Die axiale Sicherung derartiger Bremsscheiben auf einer Nabe kann auf verschiedene Weise erfolgen. So offenbart beispielsweise die DE 198 39 844 A1 eine Bremsscheibe und eine zugehörige Achsnabe, wobei die Bremsscheibe hier mittels Schrauben so an die Nabe angekoppelt ist, daß sie axial nicht beweglich ist. Diese an sich konstruktiv sehr einfache und zuverlässige Bauweise weist jedoch den Nachteil auf, daß damit kein Toleranzausgleich möglich ist. Dies kann sich negativ auf das Bremsverhalten sowie auf die Lebensdauer der Bremsenelemente und der Lagerung auswirken.

Aus der DE 198 39 763 A1 ist eine weitere Bauweise einer Bremsscheiben-/Nabenverbindung bekannt. Hier wird die Bremsscheibe ebenfalls formschlüssig über die Nabe aufgeschoben, wobei an den Nocken der Nabe radial nach außen vorstehende Bünde ausgebildet sind, die als Anschlag für die Bremsscheibe in Axialrichtung dienen. Ferner sind zusätzlich Zwischenelemente radial zwischen der Nabe und der Bremsscheibe bzw. umfangsseitig zwischen den Nocken der Nabe und Abstützelementen der Bremsscheibe angeordnet, über welche die Drehmoment- und Kraftübertragungen beim Bremsvorgang erfolgt. Die axiale Festlegung der Bremsscheibe auf der den Bünden abgelegenen Seite erfolgt durch einen Sicherungsring, der in eine Ringnut an der Nabe eingefügt ist und radial derart nach außen vorsteht, daß hierdurch die Bremsscheibe in axialer Richtung formschlüssig gehalten ist. Hierbei ist in der Regel ein geringes Spiel der Bremsscheibe in Axialrichtung gegeben, so daß eine Ausgleichsbewegung in diese Richtung möglich ist. Damit sind jedoch auch stoßartige Beanspruchungen und mehr oder minder kontrollierte Bewegungen der Bremsscheibe möglich, was sich wiederum nachteilig auf die Lebensdauer der Bauteile auswirkt.

Ferner ist aus der WO 97/48 919 eine Bremsscheiben-/Nabenverbindung bekannt geworden, bei der die Bremsscheibe in Axialrichtung auf einer Seite durch einen starren Anschlag in Gestalt eines Sicherungsringes und auf der anderen Seite mittels einem federelastischem Sicherungsring festgelegt ist. Der federelastische Sicherungsring ist hierbei voll umlaufend ausgebildet und wird mit der Nabe verschraubt. Er weist eine Mehrzahl an Anlageflächen auf, die umfangsseitig verteilt sind und mit der Seitenfläche der Bremsscheibe in Kontakt stehen. Die Befestigung dieses federelastischen Sicherungsringes an der Radnabe folgt dabei in dieser Bauweise mit gewünschtem großen Abstand von den Anlageflächen an der Bremsscheibe, so daß sich ein vorbestimmter und nicht zu geringer Federweg, daß heißt eine axiale Bewegungsmöglichkeit der Bremsscheibe, ergibt. Eine axiale Verschiebung der Bremsscheibe ist somit nur gegen diese Federkraft möglich, wobei Stoßbelastungen folglich abgefedert und gedämpft werden.

Allerdings weist auch diese Bauweise Nachteile auf. So kann es bei extremen Stoßbelastungen oder bei großen Auslenkungen aus der Normallage zu einem Bruch des federelastischen Sicherungsringes kommen, sobald dessen elastischer Verformungsbereich überschritten ist. Darüber hinaus unterliegt der federelastische Sicherungsring sehr erheblichen thermischen Belastungen, die von der sich während des Bremsvorganges nicht unerheblich erhitzenden Bremsscheibe herrühren. Diese thermische Belastung führt zu einer Veränderung der Materialeigenschaften des federelastischen Sicherungsringes und insbesondere der Federeigenschaften. Somit können sich die Verhältnisse in diesem Bereich, d.h. das mögliche axiale Spiel der Bremsscheibe, während eines Bremsvorganges aufgrund der thermischen Einwirkung verändern, so daß sich eine verringerte Berechenbarkeit und Zuverlässigkeit der Bremsanordnung an sich ergibt. Die Lebensdauer dieses federelastischen Sicherungsringes ist somit relativ gering.

Der Erfindung liegt daher die Aufgabe zugrunde, eine gattungsgemäße Bremsscheiben-/Nabenverbindung für Fahrzeugscheibenbremsen insbesondere für Nutzfahrzeuge derart weiterzubilden, daß die Belastung für die Federeinrichtung minimiert und somit die Zuverlässigkeit der Fahrzeugscheibenbremse erhöht werden kann.

Diese Aufgabe wird durch eine Bremsscheiben-/Nabenverbindung mit den Merkmalen des Anspruches 1 gelöst.

So ist es erfindungsgemäß vorgesehen, daß eine Mehrzahl an Zwischenelementen angeordnet ist, die umfangsseitig verteilt jeweils radial zwischen der Nabe und der Bremsscheibe angeordnet sind, und daß die Federeinrichtung eine Mehrzahl an Federelementen aufweist, wobei jedes Federelement einen Halteabschnitt, mittels dem es an der Nabe festgelegt ist, und wenigstens einen Federabschnitt aufweist, der sich an wenigstens einem zugeordneten Zwischenelement abstützt. Damit wird erfindungsgemäß erstmals erreicht, daß sich die Elemente der Federeinrichtung nicht mehr unmittelbar an der Bremsscheibe abstützen, sondern dies an den Zwischenelementen erfolgt. Hierdurch läßt sich die thermische Belastung der Federeinrichtung deutlich reduzieren. Gleichzeitig ist weiterhin ein spielfreie Ankopplung der Bremsscheibe an die Nabe im unbelasteten Zustand erzielbar, wobei axiale Kräfte gegebenenfalls elastisch aufgenommen werden, so daß eine stoßartige Belastung vermieden werden kann.

Da die Federeinrichtung eine Mehrzahl an Federelementen aufweist, ist ein noch besserer Ausgleich von Fertigungstoleranzen etc. möglich, wobei jedes Federelement für sich alleine wirkt und vom benachbarten Federelement unbeeinflußt ist. Sollte es, eventuell auch durch äußere Einwirkung, zu einer Beschädigung eines Federelements kommen, so bleiben die anderen Federelemente hiervon unberührt, d.h. die Beschädigung greift in der Regel nicht auf das Nachbarelement über. Daher erhöht sich die Betriebs- bzw. Ausfallsicherheit der Anordnung insgesamt.

Die erfindungsgemäße Bremsscheiben-/Nabenverbindung zeichnet sich daher bei einfacher konstruktiver Bauweise insbesondere dadurch aus, daß die Federeinrichtung in besserem Maße vor thermischen und mechanischen Belastungen geschützt ist und somit eine erhöhte Lebensdauer aufweist.

Vorteilhafte Weiterbildungen der Erfindung ergeben sich aus den Merkmalen der Unteransprüche.

So kann auf einer Seite der Bremsscheibe eine Federeinrichtung angeordnet sein, während auf der anderen Seite ein fester Anschlag vorliegt. Damit vereinfacht sich insbesondere die Montage der erfindungsgemäßen Bremsscheibe-/Nabenverbindung wesentlich, da wenige Einzelelemente vorliegen und eine Montage von einer Seite vorgenommen werden kann. Alternativ ist es jedoch auch möglich, auf beiden Seiten der Bremsscheibe eine Federeinrichtung vorzusehen.

Wenn die axiale Versetzung der Bremsscheibe durch eine Anschlageinrichtung auf ein vorbestimmtes Maß begrenzt ist, kann wirksam verhindert werden, daß die Federeinrichtung mechanisch überlastet wird, d.h. daß eine Verformung über die elastische Verformungsgrenze hinaus erfolgt. Die Zuverlässigkeit der Anordnung erhöht sich dadurch weiter.

Hierbei kann die Anschlageinrichtung durch den Halteabschnitt jedes Federelements ausgebildet sein, so daß auf ein zusätzliches Bauelement verzichtet werden kann. Hierdurch vereinfacht sich insbesondere die Montage weiter. Die hierbei auftretende Kraft in Axialrichtung wird dann durch die Befestigungseinrichtung aufgenommen, mittels der der Halteabschnitt an der Nabe festgelegt ist.

So kann der Halteabschnitt jedes Federelements beispielsweise mittels einer Schraube an einem jeweiligen Nocken der Nabe festgelegt sein, wodurch sich eine zuverlässige Verbindung mit an sich bekannten Mitteln und somit kostengünstig realisieren läßt.

Von weiterem Vorteil ist es, wenn jedes Federelement ein Durchgangsloch mit Innengewinde aufweist, durch welches die Schraube zur Herstellung einer verliersicher vormontierten Einheit durchgeschraubt ist, und wenn jeder Nocken in Axialrichtung der Nabe ein Innengewinde sowie einen Kanal mit einer Länge aufweist, durch welche die Schraube hindurchgreift, wobei die Schraube einen gewindefreien Schaftabschnitt sowie einen Gewindeabschnitt mit einer Länge aufweist, die geringer als die Länge des Kanals zuzüglich der Materialdicke des Federelements ist. Durch die somit ermöglichte Vormontage der Schraube mit dem Federelement läßt sich die Hauptmontage der erfindungsgemäßen Bremsscheiben-/Nabenverbindung wesentlich vereinfachen. Hierbei ist von weiterer Bedeutung, daß der Gewindeabschnitt der Schraube auf eine vorbestimmten Länge begrenzt ist, so daß das Federelement an der gewünschten Stelle auf den Zwischenelementen an der Bremsscheibe aufgesetzt werden kann und erst dann die Schraube in den Nocken eingeschraubt werden muß. Das Federelement läßt sich somit positionieren, bevor es befestigt wird.

Darüber hinaus kann jedes Federelement zwei Federabschnitte aufweisen, die sich in entgegengesetzten Richtungen vom Halteabschnitt weg erstrecken, so daß keine einseitige Belastung am Halteabschnitt auftritt. Darüber hinaus wird hierdurch der weitere Vorteil erzielt, daß gleichzeitig an zwei Stellen eine federelastische Abstützung bereitgestellt werden kann. Die Anzahl der Bauelemente läßt sich somit weiter reduzieren, wodurch sich auch der Montageaufwand verringert.

Zudem kann jedes Federelement einen Stützabschnitt aufweisen, der sich radial an der Bremsscheibe abstützt. Damit kann verhindert werden, daß sich ein Federelement beim Anziehen der Schrauben oder dergleichen verdreht. Dies ist insbesondere von Vorteil, wenn die Schraube und das Federelement als verliersicher vormontierte Einheit bereitgestellt sind, wie dies in Anspruch 6 definiert ist.

Die Erfindung wird nachfolgend in Ausführungsbeispielen anhand der Figuren der Zeichnung näher erläutert. Es zeigt:
- Fig. 1: eine Explosionsdarstellung der erfindungsgemäßen Bremsscheiben /Nabenverbindung;
- Fig. 2: eine Seitenansicht der erfindungsgemäßen Bremsscheiben-/Nabenverbindung im montierten Zustand, wobei ein Umfangsbereich der Bremsscheibe abgeschnitten ist;
- Fig. 3: ein Detail aus der Darstellung gemäß Fig. 2;
- Fig. 4: einen Schnitt entlang der Schraubenachse in Querrichtung zu der Darstellung in Fig. 3;
- Fig. 5: eine Vorderansicht der erfindungsgemäßen Bremsscheiben-/ Nabenverbindung;
und
- Fig. 6: eine Detailansicht aus der Darstellung gemäß Fig. 5.

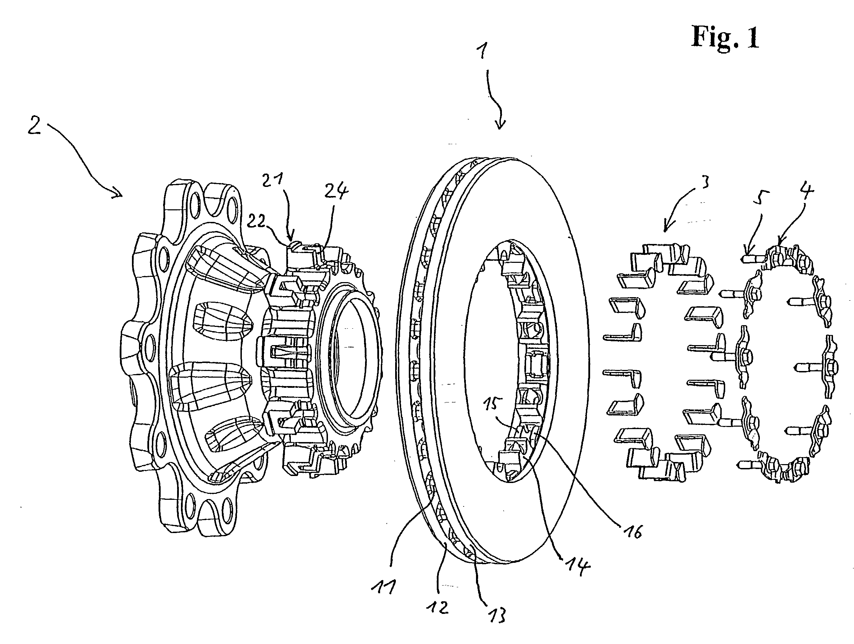

Gemäß der Darstellung in Fig. 1 weist eine Bremsscheiben-/Nabenverbindungsanordnung für Fahrzeugscheibenbremsen eine innenbelüftete Bremsscheibe 1 auf, die auf eine Nabe 2 axial aufschiebbar ist. Die Bremsscheibe 1 ist hierbei in an sich bekannter Bauweise mit über eine Mehrzahl an Stegen 11 verbundenen Reibringen 12 und 13 versehen. Ferner weist die Bremsscheibe 1 im Bereich des Umfangs des Durchgangslochs eine Mehrzahl gleichmäßig umfangsseitig beabstandet angeordneter Abstützelemente 14 auf. Diese wirken mit Nocken 21 zusammen, die am Außenumfang der Nabe 2 gleichmäßig beabstandet angeordnet sind.

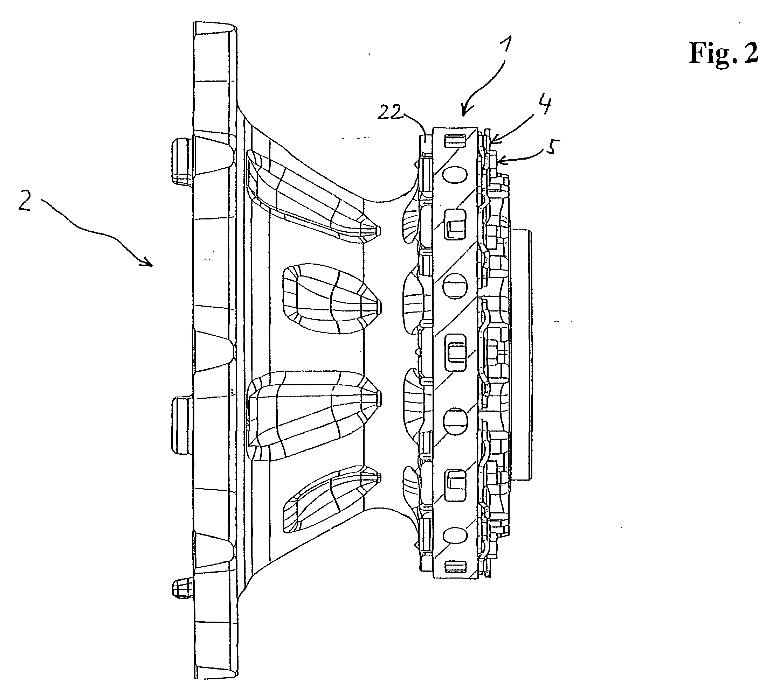

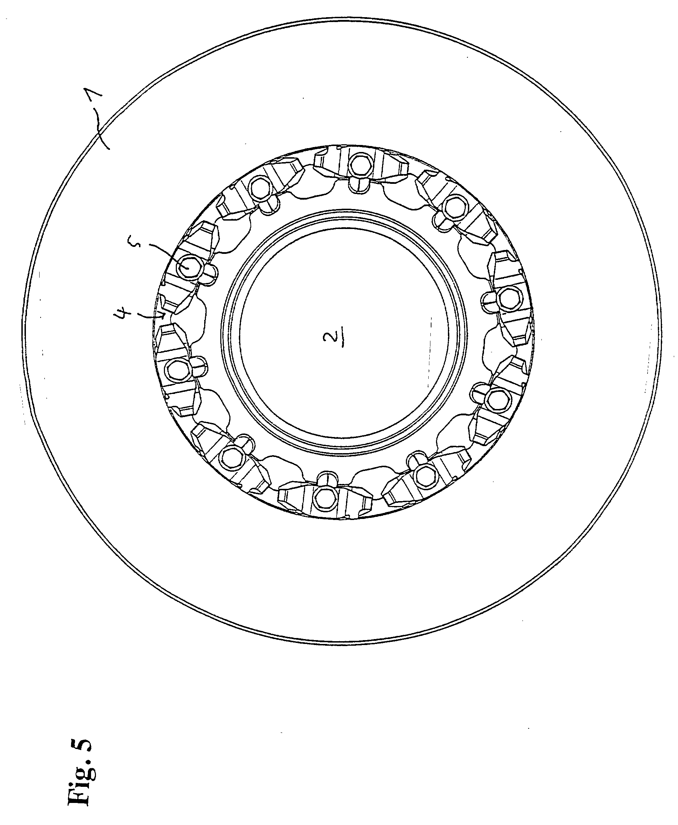

Im montierten Zustand wirken die Nocken 21 mit den Abstützelementen 14 derart zusammen, daß eine Übertragung des Bremsmoments ermöglicht wird. Hierbei sind radial zwischen der Bremsscheibe 1 und der Nabe 2 Zwischenelemente 3 angeordnet. Ferner sind Federelemente 4 vorgesehen, welche mittels Schrauben 5 an die Nabe 2 angekoppelt werden. Der montierte Zustand der Anordnung ist in den Ansichten gemäß Fig. 2 und Fig. 5 ersichtlich.

Wie insbesondere aus den Fig. 1 bis 3 erkennbar ist, sind die Zwischenelemente 3 derart abgewinkelt ausgebildet, daß ein Hauptabschnitt 31 umfangsseitig zwischen den Nocken 21 und den Abstützelementen 14 zu liegen kommt, während ein Winkelabschnitt 32 an einer Seite der Bremsscheibe 1 anliegt.

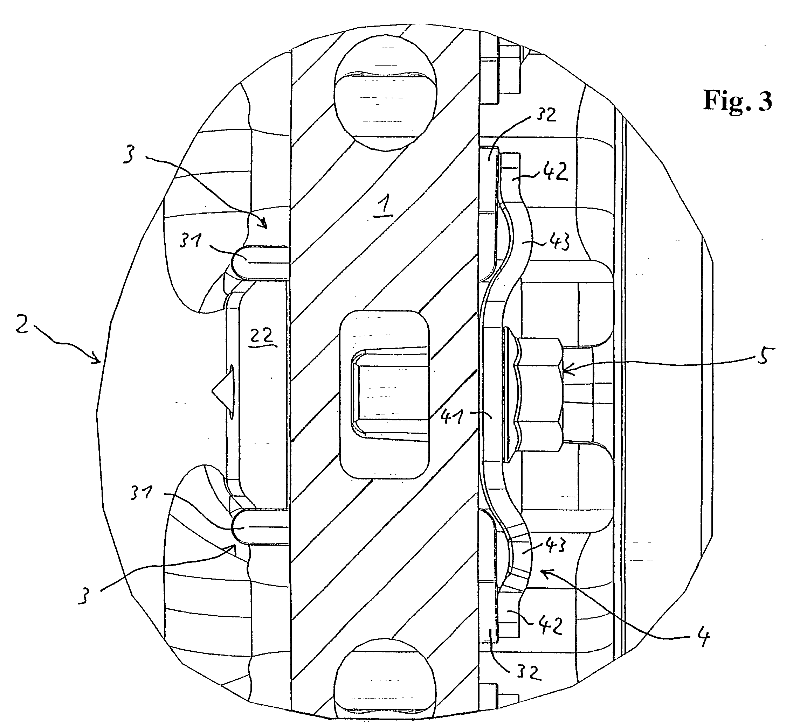

Jedes Federelement 4 weist, wie insbesondere in Fig. 3 erkennbar ist, einen Halteabschnitt 41 und zwei Federabschnitte 42 auf, die sich in den gegengesetzten Richtungen weg vom Halteabschnitt 41 erstrecken. Um die Federwirkung zu erhöhen und klar definierte Andruckflächen zu schaffen, sind die Federabschnitte 42 über gekrümmte Zwischenabschnitte 43 mit dem Halteabschnitt 41 verbunden. Gleichzeitig ist das Ausmaß der Andruckfläche somit begrenzt, wodurch ein Wärmeübergang von einer eventuell heißen Bremsscheibe begrenzt ist. Das Federelement 4 stützt somit die Bremsscheibe 1 über die Zwischenelemente 3 gegen einen Anschlag 22 an der Nabe 2 ab.

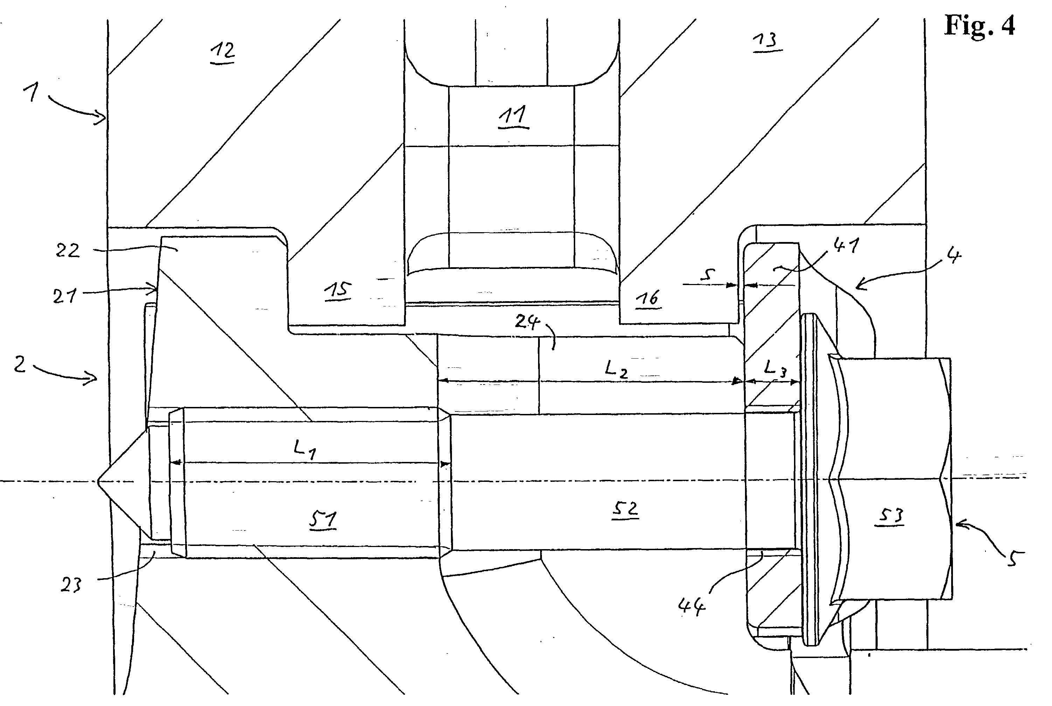

Die Gestalt der Nabe 2 im Aufnahmebereich der Bremsscheibe 1 ist insbesondere aus den Fig. 1 und 4 erkennbar. Wie hier gezeigt ist, weist jeder Nocken 21 neben dem Anschlag 22 ein Innengewinde 23 auf, mit welchem die Schraube 5 verschraubt wird. Ferner weist der Nocken 21 einen Lüftungskanal 24 auf, mittels dem der Wärmeabtransport zwischen den Reibringen 12 und 13 der Bremsscheibe 1 verbessert wird.

Wie aus Fig. 4 ferner erkennbar ist, weist die Bremsscheibe 1 im Bereich der Nocken 21 ferner Anschläge 15 und 16 auf, wobei der Anschlag 15 am Anschlag 22 der Nabe 2 anliegt, wenn keine axiale Kraft auf die Bremsscheibe 1 einwirkt. Gleichzeitig ist der Anschlag 16 dann um ein vorbestimmtes Maß s von der zugewandten Hauptfläche des Halteabschnitts 41 beabstandet. Dieser Abstand wird durch die federelastische Vorspannung des Federelements 4 aufrecht erhalten, so lange keine axiale Kraft anliegt, welche die Federkraft der Federelemente 4 überwindet.

Wenn derartige axiale Kräfte jedoch auftreten, so werden diese elastisch durch die Federelemente 4 aufgenommen. Insbesondere wird jedoch hierbei eine stoßartige Belastung am Halteabschnitt 41 verhindert. Erst wenn der Abstand s zwischen dem Halteabschnitt 41 und dem Anschlag 16 überwunden ist, wird die axiale Kraft nicht mehr von den Federabschnitten 42, sondern von der Schraube 5 aufgenommen. Hierbei werden die axialen Kräfte jedoch durch die Federkraft der Federabschnitte 42 gedämpft, bevor sie über den Halteabschnitt 41 und die Schraube 5 abgestützt werden. Aufgrund dieser Abstützung ist eine Überdehnung der Federabschnitte 42 zuverlässig verhindert.

Wie aus Fig. 4 ferner erkennbar ist, weist jedes Federelement 4 ein Innengewinde 44 auf, durch welches ein Gewindeabschnitt 51 der Schraube 5 hindurchgeschraubt ist. Daneben weist die Schraube 5 noch einen Schaftabschnitt 52 auf, der zwischen einem Schraubenkopf 53 und den Gewindeabschnitt 51 angeordnet ist. Der Schaftabschnitt 52 weist einen Durchmesser auf, der geringer ist als der minimale Durchmesser des Innengewindes 44 im Federelement 4. Ferner weist der Gewindeabschnitt 51 eine Länge L₁ auf, die geringer ist als eine Länge L₂ des Lüftungskanals 24 in der Nabe 2 plus einer Länge L₃, welche der Dicke des Halteabschnitts 41 des Federelements 4 entspricht. Damit können das Federelement 4 und die Schraube 5 zusammen als eine vormontierte Einheit bereitgestellt werden, wie dies in Fig. 1 dargestellt ist. Hierdurch vereinfacht sich die Montage, da diese vormontierte Einheit an die vorbestimmte Stelle an der Nabe 2 aufgesetzt werden kann, ohne daß die Schraube 5 bereits in das Innengewinde 23 der Nabe 2 eingedreht werden muß. Das Eindrehen der Schraube 5 kann dann nach dem Ausrichten des Federelements 4 erfolgen. Gleichzeitig sind das Federelement 4 und die Schraube 5 durch diese Bauweise verliersicher miteinander gekoppelt.

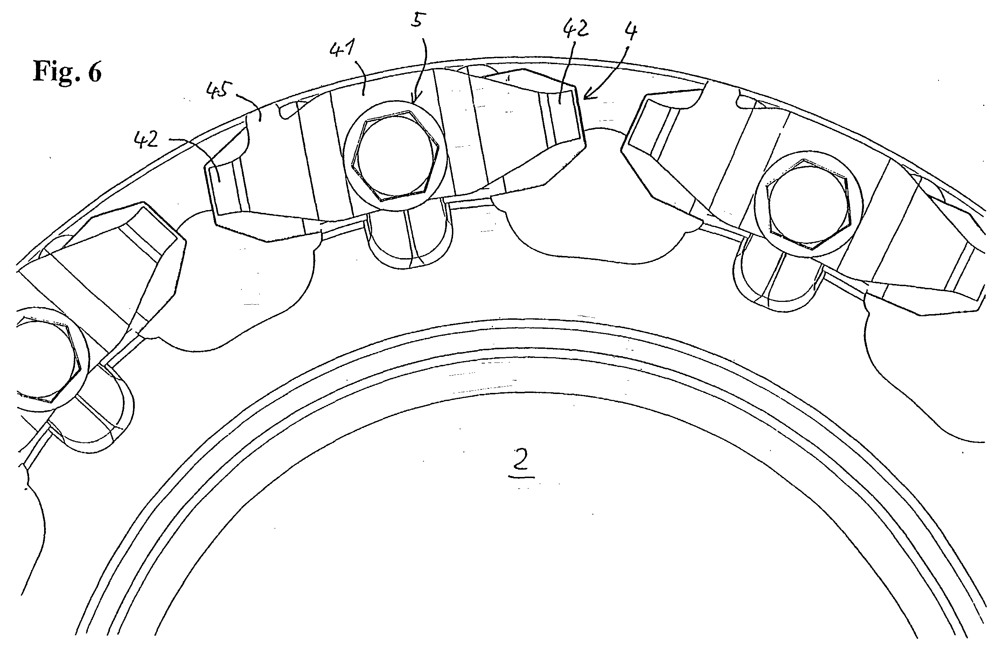

Aus der Seitenansicht gemäß Fig. 5 ist ferner erkennbar, daß eine Mehrzahl von Federelementen 4, im vorliegenden Falle zehn, zur Festlegung der Bremsscheibe 1 auf der Nabe 2 angeordnet ist. Insbesondere aus der Detailansicht gemäß Fig. 6 ist zudem erkennbar, daß das als einfaches Blechbiegeteil ausgeführte Federelement 4 zudem mit einem Stützabschnitt 45 versehen ist, der sich an der Umfangfläche des Durchgangslochs der Bremsscheibe 1 abstützt und eine Verdrehung des Federelements 4 verhindert.

Die Erfindung läßt neben der hier erläuterten Ausführungsform weitere Gestaltungsansätze zu. So ist es auch möglich, anstelle des festen Anschlags 22 an der Nabe 2 eine weitere Federeinrichtung anzuordnen, die beispielsweise entsprechen der Anordnung mit den Federelementen 4 ausgebildet ist. Damit könnte eine beidseitige elastische Abstützung der Bremsscheibe 1 an der Nabe 2 realisiert werden, wobei der Endanschlag in beiden axialen Richtungen erst nach Überwindung des Federwegs erreicht werden würde.

Weiter ist es nicht erforderlich, daß der Halteabschnitt 41 als Anschlag für die Begrenzung des Federweges dient. Statt dessen kann auch ein anderes Anschlagelement angekoppelt, z.B. angeschraubt werden, oder es kann auf einen derartigen Anschlag gänzlich verzichtet werden, soweit die auftretenden axialen Kräfte zuverlässig durch die Federelemente 4 aufgenommen werden können.

Die Federelemente 4 können auch mittels Nieten, Bolzenverbindungen etc. anstelle mit der Schraube 5 mit der Nabe 2 gekoppelt werden.

Weiter ist es nicht erforderlich, daß die Schraube 5 die oben beschriebene spezielle Gestalt aufweist. Insbesondere können die Federelemente 4 auch getrennt von den Schrauben 5, d.h. nicht als vormontierte Baueinheit, bereitgestellt werden.

In der abgeänderten Bauweise wäre es auch möglich, daß jedes Federelement 4 nur einen Federabschnitt aufweist, der sich auf einem eventuell angepaßten Zwischenelement abstützt. Eventuell kann ferner auch auf den Stützabschnitt 45 verzichtet werden, wenn eine Verdrehung der Federelements 4 auf andere Weise unterbunden wird, bzw. mit keinem Funktionsverlust verbunden wäre.

Die Erfindung schafft somit eine Bremsscheiben-/Nabenverbindung für Fahrzeugscheibenbremsen mit einer Nabe 2 und einer hierauf verdrehsicher angeordneten Bremsscheibe 1, wobei die Bremsscheibe 1 in Axialrichtung der Nabe 2 derart angeordnet ist, daß sie gegen eine durch eine Mehrzahl von Federelementen 4 aufgebrachte federelastische Vorspannung axial versetzbar ist. Dabei weist jedes Federelement 4 einen Halteabschnitt 41 auf, mittels dem es an der Nabe 2 festgelegt ist. Ferner enthält jedes Federelement 4 wenigstens einen Federabschnitt 42, der sich an wenigstens einem zugeordneten Zwischenelement 3 abstützt, welches im wesentlichen zwischen der Nabe 2 und der Bremsscheibe 1 angeordnet ist. Die erfindungsgemäße Bauweise hat hierbei insbesondere den Vorteil, daß die Federelemente 4 nicht in direktem Kontakt mit der Bremsscheibe 1 stehen, so daß eine thermische Überlastung der Federelemente 4 wirksam unterbunden werden kann. Die Funktionssicherheit der Federelemente 4 läßt sich daher dauerhaft aufrecht erhalten.

### Bezugszeichenliste

- 1: Bremsscheibe
- 2: Nabe
- 3: Zwischenelemente
- 4: Federelemente
- 5: Schrauben
- 11: Stege
- 12, 13: Reibringe
- 14: Abstützelemente
- 15, 16: Anschläge
- 21: Nocken
- 22: Anschlag
- 23: Innengewinde
- 24: Lüftungskanal
- 31: Hauptabschnitt
- 32: Winkelabschnitt
- 41: Halteabschnitt
- 42: Federabschnitte
- 43: Gekrümmte Zwischenabschnitte
- 44: Innengewinde
- 45: Stützabschnitt
- 51: Gewindeabschnitt
- 52: Schaftabschnitt
- 53: Kopf

## Patentansprüche

1. Bremsscheiben-/Nabenverbindung für Fahrzeugscheibenbremsen, insbesondere für Nutzfahrzeuge, mit einer Nabe (2) mit Nocken (21) und einer hierauf verdrehsicher angeordneten Bremsscheibe (1), wobei die Bremsscheibe (1) in Axialrichtung der Nabe (2) derart gehalten ist, daß sie gegen eine durch eine Federeinrichtung aufgebrachte federelastische Vorspannung axial versetzbar ist, **dadurch gekennzeichnet, daß** eine Mehrzahl an Zwischenelementen (3) angeordnet ist, wobei die Zwischenelemente (3) umfangsseitig verteilt jeweils radial in Axialrichtung der Nabe zwischen der Nabe und der Bremsscheibe (1) angeordnet sind, und daß die Federeinrichtung eine Mehrzahl an Federelementen (4) aufweist, wobei jedes Federelement (4) einen Halteabschnitt (41), mittels dem es an der Nabe (2) festgelegt ist, und wenigstens einen Federabschnitt (42) aufweist, der sich an wenigstens einem Winkelabschnitt (32) eines zugeordneten Zwischenelementes (3) abstützt.

2. Bremsscheiben-/Nabenverbindung nach Anspruch 1, **dadurch gekennzeichnet, daß** auf einer Seite der Bremsscheibe (1) eine Federeinrichtung angeordnet ist und auf der anderen Seite ein fester Anschlag (22) vorliegt.

3. Bremsscheiben-/Nabenverbindung nach Anspruch 1 oder 2, **dadurch gekennzeichnet, daß** die axiale Versetzung der Bremsscheibe (1) durch eine Anschlageinrichtung auf ein vorbestimmtes Maß (s) begrenzt ist.

4. Bremsscheiben-/Nabenverbindung nach Anspruch 3, **dadurch gekennzeichnet, daß** die Anschlageinrichtung durch den Halteabschnitt (41) der Federelemente (4) ausgebildet ist.

5. Bremsscheiben-/Nabenverbindung nach einem der Ansprüche 1 bis 4, **dadurch gekennzeichnet, daß** der Halteabschnitt (41) jedes Federelements (4) mittels einer Schraube (5) an einem jeweiligen Nocken (21) der Nabe (2) festgelegt ist.

6. Bremsscheiben-/Nabenverbindung nach Anspruch 5, **dadurch gekennzeichnet, daß** jedes Federelement (4) ein Innengewinde (44) aufweist, durch welches die Schraube (5) zur Herstellung einer verliersicher vormontierten Einheit hindurch geschraubt ist, und daß jeder Nocken (21) in Axialrichtung der Nabe (2) ein Innengewinde (23) sowie einen Kanal (24) mit einer Länge (L₂) aufweist, durch welche die Schraube (5) hindurchgreift, wobei die Schraube (5) einen gewindefreien Schaftabschnitt (52) sowie einen Gewindeabschnitt (51) mit einer Länge (L₁) aufweist, die geringer als die Länge (L₂) des Kanals (24) zuzüglich einer Materialstärke (L₃) des Federelements (4) ist.

7. Bremsscheiben-/Nabenverbindung einem der Ansprüche 1 bis 6, **dadurch gekennzeichnet, daß** jedes Federelement (4) zwei Federabschnitte (42) aufweist, die sich in entgegengesetzten Richtungen vom Halteabschnitt (41) weg erstrecken.

8. Bremsscheiben-/Nabenverbindung einem der Ansprüche 1 bis 7, **dadurch gekennzeichnet, daß** jedes Federelement (4) einen Stützabschnitt (45) aufweist, der sich radial an der Bremsscheibe (1) abstützt.

## Claims

1. Brake disc/hub assembly for vehicle disc brakes, in particular for heavy-duty vehicles, comprising a hub (2) with cams (21) and a brake disc (1) disposed thereon in a manner preventing torsion and twisting, with said brake disc (1) being held along the axial extension of said hub (2) in such a way that it can be axially offset in opposition to a resilient bias applied by a spring means, **characterised in that** a plurality of intermediate elements (3) is arranged, with said intermediate elements (3) being distributed on the side of the periphery and each radially along the axial extension of said hub between said hub and said brake disc (1), and that said spring means comprises a plurality of spring elements (4), with each spring element (4) including one holding section (41) by means of which it is located on said hub (2) and at least one spring section (42) that is supported on at least one angular section (32) of an associated intermediate element (3).

2. Brake disc/hub assembly according to Claim 1, **characterised in that** a spring means is disposed on one side of said brake disc (1) and that a fixed stop (22) is present on the other side.

3. Brake disc/hub assembly according to Claim 1 or 2, **characterised in that** the axial offset of said brake disc (1) is restricted to a predetermined measure (s) by means of a stop means.

4. Brake disc/hub assembly according to Claim 3, **characterised in that** said stop means is formed by said holding section (41) of said spring elements (4).

5. Brake disc/hub assembly according to any of the Claims 1 to 4, **characterised in that** said holding section (41 ) of each spring element (4) is fixed by means of a screw (5) at a respective cam (21) of said hub (2).

6. Brake disc/hub assembly according to Claim 5, **characterised in that** each spring element (4) comprises an internal thread (44) through which said screw (5) is screwed so as to form a unit pre-assembled in a loss-free manner, and that each cam (21) comprises an internal thread (23) as well as a passage (24) having a length (L₂) along the axial direction of said hub (2), through which said screw (5) is engaged, with said screw (5) presenting a thread-less shaft section (52) as well as a threaded section (51) having a length (L₁) that is shorter than the length (L₂) of said passage (24) plus a material thickness (L₃) of said spring element (4).

7. Brake disc/hub assembly according to any of the Claims 1 to 6, **characterised in that** each spring element (4) comprises two spring sections (42) that extend in opposite directions from said holding section (41).

8. Brake disc/hub assembly according to any of the Claims 1 to 7, **characterised in that** each spring element (4) comprises a supporting section (45) that is radially supported on said brake disc (1).

## Revendications

1. Ensemble disque de freinage/moyeu pour freins à disque de véhicule, en particulier pour des véhicules utilitaires, comprenant un moyeu (2) aux saillies (21) et à un disque de freinage (1) y disposé sur le moyeu d'une manière à empêcher la torsion, audit disque de freinage (1) étant tenu le long de l'étendue axiale dudit moyeu (2) d'une telle façon, qu'on puisse la déporter en sens axial à l'encontre d'une précontrainte élastique appliquée moyennant un moyen résilient, **caractérisé en ce qu'**une pluralité d'éléments intermédiaires (3) est disposée, aux éléments intermédiaires étant distribués du côté de la périphérie, dont chacun s'étend en sens radial le long de l'étendue axiale dudit moyeu entre ledit moyeu et ledit disque de freinage (1), et **en ce que** ledit moyen résilient comprend une pluralité d'éléments résilients (4), à chaque élément résilient (4) comprenant un segment de retenue (41) moyennant duquel il est fixé audit moyeu (2), et au moins un segment résilient (42), qui s'appuie à au moins un segment angulaire (32) d'un élément intermédiaire affecté (3).

2. Ensemble disque de freinage/moyeu selon la revendication 1, **caractérisé en ce qu'**un moyen résilient est disposé d'un côté dudit disque de freinage (1 ) et **en ce qu'**une butée fixe (22) est présente de l'autre côté.

3. Ensemble disque de freinage/moyeu selon la revendication 1 ou 2, **caractérisé en ce que** le déport axial dudit disque de freinage (1) est restreint à une mesure prédéterminée (s) moyennant un moyen d'arrêt.

4. Ensemble disque de freinage/moyeu selon la revendication 3, **caractérisé en ce que** ledit moyen d'arrêt est formé par ledit segment de retenue (41) desdits éléments résilients (4).

5. Ensemble disque de freinage/moyeu selon une quelconque des revendications 1 à 4, **caractérisé en ce que** ledit segment de retenue (41 ) de chaque élément résilient (4) est fixé moyennant une vis (5) à une saillie respective (21) dudit moyeu (2).

6. Ensemble disque de freinage/moyeu selon la revendication 5, **caractérisé en ce que** chaque élément résilient (4) comprend un taraudage (44) à travers duquel ladite vis (5) est vissée afin de former une unité pré-assemblée protégée de perte, et **en ce que** chaque saillie (21) comprend un taraudage (23) ainsi qu'un passage (24) d'une longueur (L₂) le long de l'orientation axiale dudit moyeu (2), à travers duquel ladite vis (5) est mise en prise, à ladite vis (5) présentant un segment de tige non fileté (52) ainsi qu'un segment fileté (51) ayant une longueur (L₁) qui est plus courte que la longueur (L₂) dudit passage (24) plus une épaisseur de matériau (L₃) dudit élément résilient (4).

7. Ensemble disque de freinage/moyeu selon une quelconque des revendications 1 à 6, **caractérisé en ce que** chaque élément résilient (4) comprend deux segments résilients (42), qui s'étendent en directions opposées, en faisant saillie dudit segment de retenue (41).

8. Ensemble disque de freinage/moyeu selon une quelconque des revendications 1 à 7, **caractérisé en ce que** chaque élément résilient (4) comprend un segment d'appui (45) qui s'appuie, en sens radial, sur ledit disque de freinage (1).
